# EUROPÄISCHE PATENTANMELDUNG

(11) **EP 1 327 835 A2**
(43) Veröffentlichungstag der Anmeldung: **16.07.2003**
(21) Anmeldenummer: 03000250.5
(22) Anmeldetag: 08.01.2003
(51) Int. Cl.: F24H 3/04, H01M 8/10

(54) **Vorrichtung zur Erwärmung von Luft mit einer Brennstoffzelle**

(30) Priorität: 08.01.2002 DE 10200404
(71) Anmelder: H2-Interpower GmbH, 91126 Schwabach (DE)
(72) Erfinder: Ruthrof, Klaus, 90489 Nürnberg (DE); Grosser, Armin, 91154 Roth (DE); Gunkel, Christian, 91126 Schwabach (DE); Dutschke, Bernhard, 90433 Nürnberg (DE); Rupprecht, Gerd, 90559 Burgthann (DE); Burfeind, Jens, 91126 Schwabach (DE)
(74) Vertreter: Patentanwälte Rehberg + Hüppe

(57) **Zusammenfassung**

Eine Vorrichtung dient zur Erwärmung von Luft und weist eine Luftführung (1) und mindestens eine Brennstoffzelle (3) zur Oxidation eines Brenngases auf. Die Brennstoffzelle (3) ist eine luftatmende Brennstoffzelle (3) mit einer Protonenaustauschmembran zur kalten Oxidation des Brenngases. Die Luftführung führt Luft (11) an der Brennstoffzelle (3) vorbei, um die Brennstoffzelle (3) gleichzeitig mit Sauerstoff zu versorgen und die Luft (11) durch die Abwärme der Brennstoffzelle (3) zu erwärmen.

## Beschreibung

Die Erfindung bezieht sich auf eine Vorrichtung zur Erwärmung von Luft mit einer Luftführung und mit mindestens einer Brennstoffzelle zur Oxidation eines Brenngases. Speziell geht es um die Ausbildung einer Heizung für Wohnräume, insbesondere für Wohnräume von Niedrigenergiehäusern.

Heizungsanlagen mit Brennstoffzellen sind grundsätzlich bekannt. Hierbei handelt es sich um Vorrichtungen mit Hochtemperaturbrennstoffzellen, die anstelle eines üblichen Öl- oder Erdgasheizungsbrenners eingesetzt werden und Wasser einer Warmwasserheizung erwärmen und gleichzeitig elektrischen Strom erzeugen. Diese bekannten Vorrichtungen sind aufwendig in der Herstellung, und auch in ihrem Betrieb, da sie im Prinzip kontinuierlich auf der hohen Arbeitstemperatur der Hochtemperaturbrennstoffzelle gehalten werden müssen.

Der Erfindung liegt die Aufgabe zugrunde, eine besonders einfache Vorrichtung der eingangs beschriebenen Art anzuzeigen, die mit geringem Aufwand herstellbar und betreibbar sowie zur unmittelbaren Erwärmung von Luft geeignet ist.

Erfindungsgemäß wird diese Aufgabe dadurch gelöst, dass die Brennstoffzelle eine luftatmende Brennstoffzelle mit einer Protonenaustauschmembran zur kalten Oxidation des Brenngases ist und dass die Luftführung Luft an der Brennstoffzelle heranführt, um die Brennstoffzelle gleichzeitig mit Sauerstoff zu versorgen und die Luft durch die Abwärme der Brennstoffzelle zu erwärmen.

Die Erfindung besteht aus zwei miteinander wechselwirkenden Aspekten. Zunächst einmal ist vorgesehen, als Brennstoffzelle eine luftatmende Brennstoffzelle mit einer Protonenaustauschmembran zu verwenden, um das Brenngas auf eine Weise zu oxidieren, die üblicherweise als kalt bezeichnet wird. Dies sollte eigentlich der Verwendung einer Brennstoffzelle mit einer Protonenaustauschmembran, die auch als PEM-Brennstoffzelle bezeichnet wird, als Teil einer Heizung entgegenstehen. Die Arbeitstemperatur einer PEM-Brennstoffzelle und die bei ihrem Betrieb anfallende Abwärme können aber tatsächlich so hoch eingestellt werden, dass eine Verwendung einer PEM-Brennstoffzelle in einer Heizung durchaus sinnvoll ist. Besonders einfach wird der Aufbau dann, wenn es sich bei der PEM-Brennstoffzelle um eine luftatmende Brennstoffzelle handelt. Hier kann durch das Vorbeiführen von zu erwärmender Luft an der Brennstoffzelle gleichzeitig die Sauerstoffversorgung der Brennstoffzelle bewirkt werden. Dabei ergibt sich zwar zwangsläufig eine Abreicherung des Sauerstoffgehalts der Luft. Diese Abreicherung ist aber unwesentlich, zumal bei der kalten Oxidation beispielsweise von Wasserstoff als Brenngas nur Wasser entsteht und keine irgendwie schädlichen Abgase, die sich in der erwärmten Luft wiederfinden würden. Die durch die Abwärme der Brennstoffzelle erwärmte Luft kann also unmittelbar zur Erwärmung bzw. Warmhaltung eines Wohnraums verwendet werden.

Grundsätzlich ist es aber auch denkbar, wenn die Luftführung einen Wärmetauscher aufweist, in dem die von der Abwärme der Brennstoffzelle erwärmte Luft ihre Wärmeenergie an andere Luft abgibt, die dann ohne Abreicherung ihres Sauerstoffgehalts einem Wohnraum zugeführt wird. Alternativ kann mit der erwärmten Luft in dem Wärmetauscher auch Wasser erwärmt werden.

Insbesondere wenn die durch die Abwärme der Brennstoffzelle zu erwärmende Luft Außenluft ist, ist es sinnvoll, wenn die Luftführung einen anderen Wärmetauscher aufweist, in dem die zu erwärmende Luft unter Wärmeenergieabgabe von anderer Luft vorgewärmt wird. Hierbei kann es sich um Luft handeln, die aus dem jeweiligen Wohnraum im Gegenzug zu der Frischluftzufuhr herausgeführt wird.

Wie bereits angedeutet, kann das in der Brennstoffzelle kalt oxidierte Brenngas Wasserstoff sein. Dann wird die Luft nicht nur durch die Abwärme der Brennstoffzelle erwärmt, sondern auch durch Reaktionswasser mit Wasserdampf angereichert. Dies ist zwar grundsätzlich ein günstiger Effekt, um zu einem guten Wohnklima zu kommen. Die Anreicherung mit Wasserdampf kann unter Umständen aber auch zu einer Überfeuchtung führen. Dann ist es sinnvoll, den Wasserdampf aus der von der Abwärme der Brennstoffzelle erwärmten Luft auszufällen. Die hierbei anfallende Kondensationswärme kann in vorteilhafter Weise genutzt werden, um beispielsweise weitere Außenluft zu erwärmen.

In der Luftführung kann ein Wasserstoffsensor vorgesehen sein, um ausleckenden Wasserstoff zu registrieren, so dass dann die Wasserstoffzufuhr für die Brennstoffzelle abgestellt wird.

Zur Zwangsumwälzung der Luft kann die Luftführung mindestens einen elektrischen Ventilator aufweisen, der mit von der Brennstoffzelle erzeugtem Strom betrieben wird. Weiterer Strom von der Brennstoffzelle kann beispielsweise zur Stromversorgung des jeweiligen Wohnhauses ausgekoppelt werden. Das Verhältnis des erzeugten Stroms zu der erzeugten Abwärme kann durch eine Steuerung festgelegt werden, die die Abwärme der Brennstoffzelle durch die über der Brennstoffzelle anliegende Spannung einstellt. Bei unterschiedlichen Spannungen weist eine Brennstoffzelle einen unterschiedlichen elektrischen Wirkungsgrad auf. So kann die Brennstoffzelle auch so gefahren werden, dass sie außer dem Eigenbedarf der neuen Vorrichtung nur Wärme und keine überschüssige elektrische Energie erzeugt.

Die Steuerung kann auch einen Temperatursensor aufweisen, um die Einhaltung einer Maximaltemperatur der Brennstoffzelle in dem Bereich von 70 bis 85 °C zu überwachen. Bis in diesen Bereich hinein können PEM-Brennstoffzellen problemlos betrieben werden. Es resultiert eine Oberflächentemperatur der Brennstoffzellen von maximal etwa 80 °C, um die hier entlang streichende Luft zu erwärmen. Diese Luft kann dabei, insbesondere nach Vorwärmung in einem Wärmetauscher ohne weiteres auf 30 bis 40 °C angehoben werden.

Die Brennstoffzelle kann insbesondere eine von mehreren langgestreckten zylindermantelförmigen Brennstoffzellen sein, deren Wasserstoffseite innen und deren Sauerstoffseite außen liegt und die zu einem Array angeordnet sind, in dem sie mit Abstand untereinander parallel zueinander verlaufen. Bei diesem Brennstoffzellenarray ist eine sehr große Oberfläche vorhanden, an der ein Wärmeübertrag auf die zu erwärmende Luft erfolgen kann. Gleichzeitig wird die Strömung der zu erwärmenden Luft in eine große Vielzahl von Teilströmen aufgespalten.

Die zylindermantelförmigen Brennstoffzellen können jeweils einen Durchmesser von 5 bis 20 mm und eine Länge von 10 bis 50 cm aufweisen. Es gibt hier eine große Bandbreite von möglichen Ausführungsformen, insbesondere was die Detailausbildung der einzelnen Brennstoffzellen und des an ihre Polymerelektrolytmembran angrenzenden Schichtaufbaus anbelangt. Dem Fachmann stehen hier verschiedene bekannte Möglichkeiten zur Verfügung.

Die Erfindung wird im folgenden anhand von Ausführungsbeispielen näher erläutert und beschrieben, dabei zeigt
- Fig. 1: ein Array von Brennstoffzellen mit Teilen einer zugeordneten Luftführung und Anschlüssen für die Wasserstoffversorgung und Stromabfuhr,
- Fig. 2: das Array gemäß Fig. 1 im Querschnitt,
- Fig. 3: eine Kombination der Anordnung gemäß den Fig. 1 und 2 mit zwei Wärmetauschern in schematischer Ansicht und
- Fig. 4: die Anordnung gemäß den Fig. 1 und 2 integrierendes Heizungssystem ebenfalls in schematischer Ansicht.

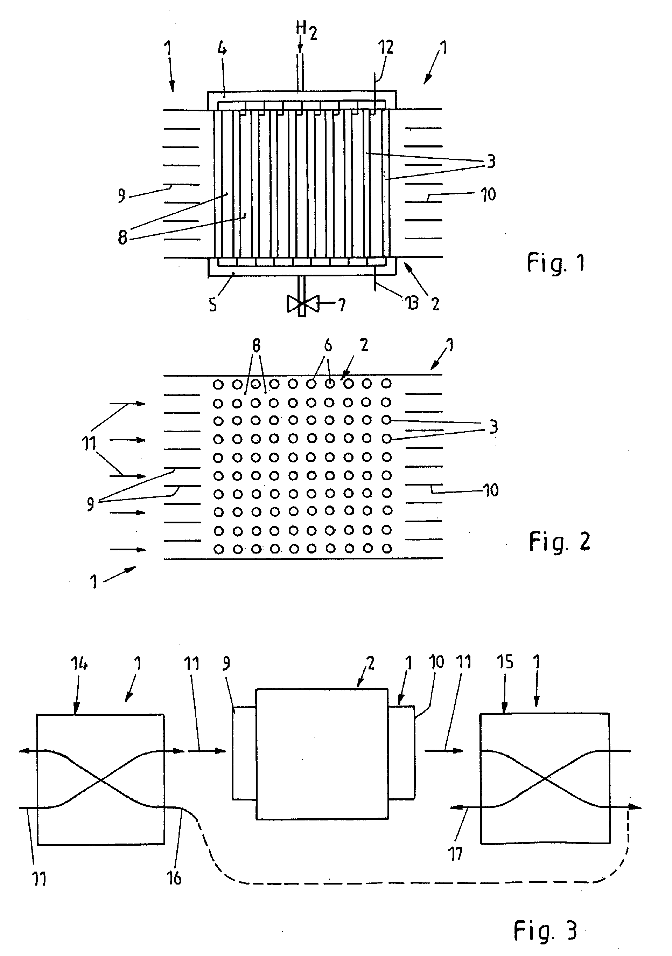

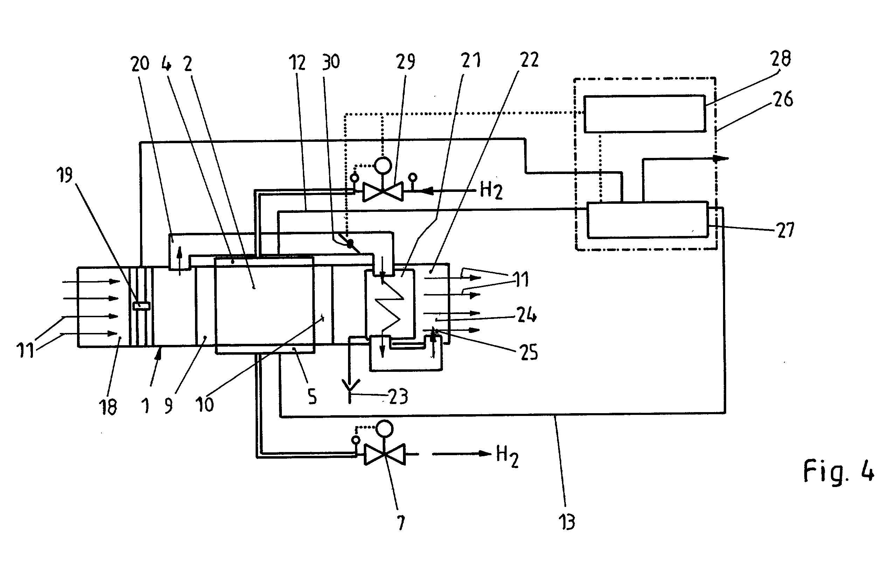

Das in den Fig. 1 und 2 in Verbindung mit Teilen einer Luftführung 1 skizzierte Array 2 besteht aus einer Vielzahl von jeweils zylindermantelförmigen oder stabförmigen Brennstoffzellen 3. Die Brennstoffzellen 3 erstrecken sich von einem ersten Wasserstoffverteiler 4 zu einem zweiten Wasserstoffverteiler 5, wobei Wasserstoff als Brenngas dem Innenraum 6 der Brennstoffzellen 3 über den Wasserstoffverteiler 4 zugeführt wird und der Wasserstoffverteiler 5 mit einem Abschlussventil 7 nur zum Spülen der Brennstoffzellen 3 dient. die einzelnen Brennstoffzellen 3 weisen eine vergleichsweise große Länge von ca. 20 cm und einen vergleichsweise geringen Durchmesser von ca. 12 mm auf, wobei ihre Wiedergabe hier nicht maßstabsgetreu ist. Sie sind in gleichen Abständen in zwei Richtungen nebeneinander angeordnet, wobei zwischen ihnen Freiräume 8 verbleiben. Die Freiräume 8 schließen an einen vorgeschalteten Strömungsgleichrichter 9 und einen nachgeschalteten Strömungsgleichrichter 10 der Luftführung 1 an, mit der Luft durch das Array 2 an den Brennstoffzellen 3 entlang geführt wird. Diese Luft 11 dient einerseits zur Sauerstoffversorgung der Brennstoffzellen 3, die luftatmend sind, also über keine separate Sauerstoffversorgung verfügen, sondern sich mit Sauerstoff aus der Umgebungsluft bedienen. Gleichzeitig wird die durch das Array 2 strömende Luft 11 durch die Abwärme der Brennstoffzellen 3 erwärmt. Bei einer Gesamtbetrachtung ist auch zu berücksichtigen, dass eine Abreicherung an Sauerstoff durch den Verbrauch der Brennstoffzellen 3 erfolgt und gleichzeitig eine Anreicherung mit Wasserdampf, der als Reaktionswasser an den Brennstoffzellen 3 aufgrund der Oxidation des Wasserstoffs anfällt. Die Abreicherung an Sauerstoff ist im Regelfall vernachlässigbar, so dass die erwärmte Luft 11 unmittelbar zur Erwärmung eines Wohnraums genutzt werden kann. Hier ist die Anreicherung mit Wasserdampf bis zu einem gewissen Maße sogar vorteilhaft für ein gesundes Wohnklima. Überschüssiger Wasserdampf kann unter Gewinnung von Kondensationswärme ausgefällt werden, was im Zusammenhang mit Fig. 4 näher erläutert werden wird. Neben der Erwärmung der Luft 11 erzeugen die Brennstoffzellen 3 auch elektrische Energie in Form von Strom, der über Zuleitungen 12 und 13 abgeführt werden kann. Die Zuleitungen 12 kontaktieren hier nicht im einzelnen dargestellte Elektroden auf der Sauerstoffseite und die Zuleitungen 13 Elektroden auf der inneren Wasserstoffseite der Brennstoffzellen 3. Durch die Spannung zwischen den Zuleitungen 12 und 13, d.h. die Betriebsspannung der Brennstoffzellen 3 kann der elektrische Wirkungsgrad der Brennstoffzellen 3 variiert werden, um je nach Bedarf verschiedene Anteile von Abwärme und elektrischer Energie zu erzeugen.

Fig. 3 zeigt die Integration der Anordnung gemäß den Fig. 1 und 2 in eine Anlage, die zusätzliche zwei Wärmetauscher 14 und 15 als Bestandteile der Luftführung 1 aufweist. Der Wärmetauscher 14 dient zum Anwärmen der Luft 11, bevor diese durch den Strömungsgleichrichter 9 in das Array 2 gelangt. Hierzu wird in dem Wärmetauscher 14 Wärmeenergie aus Abluft 16 entzogen. Der Wärmetauscher 1 dient dazu, die Wärmeenergie der in dem Array 2 erwärmten Luft 11 auf andere Luft 17 zu übertragen, die nicht in ihrem Sauerstoffgehalt reduziert ist. Die andere Luft 17 kann Umluft innerhalb eines Raums, aber auch von außen zugeführte Frischluft sein. Im letzteren Fall kann die Luft 17 zur Vorwärmung durch einen den Wärmetauscher 14 entsprechenden weiteren Wärmetauscher hindurchgeführt worden sein. Die Luft 11 kann nach der Abgabe Ihrer Wärmeenergie in dem Wärmetauscher 15 als Abluft 16 durch den Wärmetauscher 14 geführt werden. Nicht dargestellt ist in Fig. 3 die Auskondensierung von Wasserdampf aus der aus dem Array 2 austretenden Luft 11, um hiermit Kondensationswärme zu gewinnen.

Fig. 4 zeigt ein Heizungssystem, das neben der Anordnung gemäß den Fig. 1 und 2 verschiedene weitere Bestandteile aufweist. Dem Strömungsgleichrichter 9 ist ein Kaltluftkanal 18 vorgeschaltet, in dem ein Ventilator 19 angeordnet ist. Der Ventilator 19 saugt die Luft 11 an und drückt sie hauptsächlich durch das Array 2. Ein Teil der Luft 11 wird aber auch über einen Abzweig 20 der Luftführung 1 geleitet. Dieser Teilstrom kühlt einen Kondensator 21, der in einem Warmluftkanal 22 für die erwärmte Luft 11 angeordnet ist, um dort überschüssigen Wasserdampf auszufällen. Durch die Kondensationswärme des Wasserdampfs wird die durch den Abzweig 20 geführte Luft 11 angewärmt. Diese Luft wird dann noch in dem Warmluftkanal 22 mit der anderen Luft 11 vermischt. Das auskondensierte Wasser 23 kann abgeführt und als reines Wasser anderweitig verwendet werden. Am Ausgang des Warmluftkanals 22 befinden sich zwei Sicherheitssensoren. Es handelt sich einmal um einen Wasserstoffsensor 24, der überwacht, dass kein Wasserstoff aus dem Array 2 austritt. Ein Sauerstoffsensor 25 überwacht, dass keine übermäßige Abreicherung der Luft 11 an Sauerstoff bei ihrem Hindurchtreten durch das Array 2 erfolgt. Eine Steuerung 26 umfasst eine Powermanagementeinrichtung 27, die die Spannung zwischen den Zuleitungen 12 und 13 zu dem Array 2 einstellt, den Ventilator 19 mit elektrischer Energie versorgt und weitere elektrische Energie beispielsweise in ein Stromversorgungsnetz auskoppelt. Weiterhin umfasst die Steuerung 26 eine Wärme-/Feuchtmanagementeinrichtung 28. Diese wirkt auf ein Wasserstoffregelventil 29 ein, das die Wasserstoffversorgung bestimmt. Weiterhin wird eine Regulierklappe 30 eingestellt, die den Anteil der über den Abzweig 20 geführten Luft 11 festlegt. Daneben kann die Steuerung 26 auf Sensoren 24 und 25 und weitere, hier nicht dargestellte Temperatursensoren, die beispielsweise an der Oberfläche der Brennstoffzellen des Arrays 2 angeordnet sind, zurückgreifen. Mit dem in Fig. 4 gezeigten Heizungssystem kann Raumluft in idealer Weise auf eine gewünschte Temperatur und Luftfeuchtigkeit unter sehr effektivem Energieeinsatz eingestellt werden. Eine Kombination des Heizungssystems gemäß Fig. 4 mit dem Wärmetauscher 14 gemäß Fig. 3 ist dabei ohne weiteres möglich und als sinnvolle Erweiterung anzusehen.

### BEZUGSZEICHENLISTE

- 1 -: Luftführung
- 2 -: Array
- 3 -: Brennstoffzelle
- 4 -: Wasserstoffverteiler
- 5 -: Wasserstoffverteiler
- 6 -: Innenraum
- 7 -: Abschlussventil
- 8 -: Zwischenraum
- 9 -: Strömungsgleichrichter
- 10 -: Strömungsgleichrichter

- 11 -: Luft
- 12 -: Zuleitung
- 13 -: Zuleitung
- 14 -: Wärmetauscher
- 15 -: Wärmetauscher
- 16 -: Abluft
- 17 -: Luft
- 18 -: Kaltluftkanal
- 19 -: Ventilator
- 20 -: Abzweig

- 21 -: Kondensator
- 22 -: Warmluftkanal
- 23 -: Wasser
- 24 -: Wasserstoffsensor
- 25 -: Sauerstoffsensor
- 26 -: Steuerung
- 27 -: Powermanagementeinrichtung
- 28 -: Wärme-/Feuchtmanagementeinrichtung
- 29 -: Wasserstoffregelventil
- 30 -: Regulierklappe

## Patentansprüche

1. Vorrichtung zur Erwärmung von Luft mit einer Luftführung und mit mindestens einer Brennstoffzelle zur Oxidation eines Brenngases, **dadurch gekennzeichnet, dass** die Brennstoffzelle (3) eine luftatmende Brennstoffzelle (3) mit einer Protonenaustauschmembran zur kalten Oxidation des Brenngases ist und dass die Luftführung (1) Luft (11) an der Brennstoffzelle (3) vorbeiführt, um die Brennstoffzelle (3) gleichzeitig mit Sauerstoff zu versorgen und die Luft (11) durch die Abwärme der Brennstoffzelle (3) zu erwärmen.

2. Vorrichtung nach Anspruch 1, **dadurch gekennzeichnet, dass** die Luftführung (1) einen Wärmetauscher (15) aufweist, in dem die von der Abwärme der Brennstoffzelle (3) erwärmte Luft ihre Wärmeenergie an andere Luft (17) oder Wasser abgibt.

3. Vorrichtung nach Anspruch 1 oder 2, **dadurch gekennzeichnet, dass** die Luftführung (1) einen Wärmetauscher (14) aufweist, in dem die durch die Abwärme der Brennstoffzelle (3) zu erwärmende Luft (11) unter Wärmeenergieabgabe von anderer Luft (16) vorgewärmt wird.

4. Vorrichtung nach einem der Ansprüche 1 bis 3, **dadurch gekennzeichnet, dass** das Brenngas Wasserstoff ist und dass die Luftführung (1) einen Kondensator (21) aufweist, um Wasserdampf aus der von der Abwärme der Brennstoffzelle (3) erwärmten Luft (11) auszufällen und um mit der dabei anfallenden Kondensationswärme andere Luft zu erwärmen.

5. Vorrichtung nach Anspruch 4, **dadurch gekennzeichnet, dass** in der Luftführung (1) ein Wasserstoffsensor (24) vorgesehen ist.

6. Vorrichtung nach einem der Ansprüche 1 bis 5, **dadurch gekennzeichnet, dass** die Luftführung (1) mindestens einen elektrischen Ventilator (19) aufweist, der mit von der Brennstoffzelle (3) erzeugtem Strom betrieben wird.

7. Vorrichtung nach einem der Ansprüche 1 bis 6, **dadurch gekennzeichnet, dass** eine Steuerung (26) vorgesehen ist, die die Abwärme der Brennstoffzelle (3) durch die über der Brennstoffzelle (3) anliegenden Spannung einstellt.

8. Vorrichtung nach Anspruch 7, **dadurch gekennzeichnet, dass** die Steuerung (26) einen Temperatursensor aufweist, um die Einhaltung einer Maximaltemperatur der Brennstoffzelle (3) in dem Bereich von 70 bis 85 °C zu überwachen.

9. Vorrichtung nach einem der Ansprüche 1 bis 8, **dadurch gekennzeichnet, dass** die Brennstoffzelle (3) eine von mehreren langgestreckten zylindermantelförmigen Brennstoff zellen (3) ist, deren Wasserstoffseite innen und deren Sauerstoffseite außen liegt und die zu einem Array (2) angeordnet sind, in dem sie mit Abstand untereinander parallel zueinander verlaufen.

10. Vorrichtung nach Anspruch 9, **dadurch gekennzeichnet, dass** die zylindermantelförmigen Brennstoffzellen (3) jeweils einen Durchmesser von 5 bis 20 mm und eine Länge von 10 bis 50 cm aufweisen.
